# EUROPÄISCHE PATENTSCHRIFT

(11) **EP 1 238 524 B1**
(45) Veröffentlichungstag und Bekanntmachung des Hinweises auf die Patenterteilung: **11.02.2009**
(21) Anmeldenummer: 00991069.6
(22) Anmeldetag: 14.12.2000
(51) Int. Cl.: H04M 3/42, H04M 3/46

(54) **NETZWERKWEITE TEILNEHMERGRUPPE BESTEHEND AUS MEHREREN LOKALEN ANRUFÜBERNAHMEGRUPPEN**
METHOD FOR SIGNALING AN INCOMING CALL
PROCEDE DE SIGNALISATION D'UN APPEL ARRIVANT

(30) Priorität: 17.12.1999 DE 19961077
(43) Veröffentlichungstag der Anmeldung: 11.09.2002
(73) Patentinhaber: Nokia Siemens Networks GmbH & Co. KG, 81541 München (DE)
(72) Erfinder: PRANGE, Holger, 81373 München (DE); KRETEN, Axel, 82178 Puchheim (DE)
(86) Internationale Anmeldenummer: PCT/DE2000/004468
(87) Internationale Veröffentlichungsnummer: WO 2001/045367

(56) Entgegenhaltungen:
- DE-A- 19 640 266
- US-A- 5 206 901
- US-A- 5 371 781
- US-A- 5 422 941
- US-A- 5 752 191
- US-A- 5 815 563

## Beschreibung

Die Erfindung betrifft ein Verfahren zur Signalisierung eines ankommenden Rufes, der an eine zu einer Teilnehmergruppe zugeordneten Teilnehmerendeinrichtung gerichtet ist und den ein Teilnehmer anstelle an der gerufenen Teilnehmerendeinrichtung auch an einer beliebigen anderen der Teilnehmergruppe zugeordneten Teilnehmerendeinrichtung annehmen kann gemäß dem Oberbegriff des Patentanspruches 1.

Solche Teilnehmergruppen stehen z. B. mit dem Merkmal "Centrex" (Central Office and Exchange) in Zusammenhang. Das Merkmal Centrex ermöglicht, daß Teilnehmerendeinrichtungen, die an eine gemeinsame oder jeweils an verschiedene Fernmeldevermittlungsstellen eines Telekommunikationsnetzes über Teilnehmeranschlußleitungen angeschlossen sind, zu einer Centrex-Gruppe zusammengefaßt werden. Den zu der Centrex-Gruppe gehörenden Teilnehmern können dann von der für sie zuständigen Fernmeldevermittlungsstelle nahezu die gleichen Leistungsmerkmale zur Verfügung gestellt werden, die ihnen eine Nebenstellenanlage (PBX) böte, wenn deren Teilnehmerendeinrichtungen an diese angeschlossen wären.

Typische Leistungsmerkmale, die den Centrex-Teilnehmern bereitgestellt werden und teilweise denen einer Nebenstellenanlage entsprechen, sind z. B.:
- Zugang zum Telekommunikationsnetz mittels Zugangscode,
- spezielle Gebührenbehandlung für Centrex-interne Verbindungen,
- Amtsberechtigungen für ankommende bzw. abgehende Rufe,
- Anrufweitergabe (Call Transfer),
- Anrufübernahme (Call Pick Up),
- Leistungsmerkmale im Zusammenhang mit einer Anrufzentrale (Attendant Features),
- Vorzimmer und Teamfunktionen,
- verschiedenartige akustische Signale ("Klingeln" etc.).

Um das erwähnte Leistungsmerkmal Call Pick Up erfüllen zu können, wird innerhalb einer Centrex-Gruppe eine sogenannte Call-Pick-Up-Gruppe gebildet. Ein zu einer Centrex-Gruppe gehörender Teilnehmer kann dabei mehreren verschiedenen Call-Pick-Up-Gruppen zugeordnet sein.

Das Leistungsmerkmal Call Pick Up und weitere im Zusammenhang mit Centrex-Gruppen stehende Leistungsmerkmale sind beispielsweise in einer Kundenbroschüre "GeoCentrex: The Best Catch for Your Network" der Siemens AG, herausgegeben im Jahre 1995 vom Geschäftsgebiet Telekommunikationsnetze, Hofmannstr. 51, D-81359 München, Bestell-Nr. A 308080-X3093-X100-1-7635 auf Seite 42 und 43 beschrieben. In dieser Broschüre werden drei Arten des Leistungsmerkmals Call Pick Up, nämlich Call Pick Up innerhalb einer Gruppe, gerichtetes Call Pick Up und Call Pick Up im Zusammenhang mit einem Nachtservice erläutert, wobei in der Praxis das Leistungsmerkmal Call Pick Up innerhalb einer Gruppe am häufigsten zur Anwendung kommt. Demnach werden Centrex-Teilnehmer zu einer Centrex-Call-Pick-Up-Gruppe zusammengefaßt. Dies ermöglicht, daß ein der Call-Pick-Up-Gruppe zugeordneter Teilnehmer einen ankommenden Ruf, der an eine zu der Call-Pick-Up-Gruppe zugeordneten Teilnehmerendeinrichtung gerichtet ist, anstelle an der gerufenen Teilnehmerendeinrichtung auch an einer beliebigen anderen der Call-Pick-Up-Gruppe zugeordneten Teilnehmerendeinrichtung annehmen kann. Dazu wählt der Teilnehmer an der Teilnehmerendeinrichtung, an der er den Ruf entgegennehmen möchte, einen sogenannten Call-Pick-Up-Zugangscode. Auch kann es mehrere verschiedene Call-Pick-Up-Gruppen innerhalb einer Centrex-Gruppe geben. Für den Fall, daß innerhalb einer Call-Pick-Up-Gruppe mehrere ankommende Rufe anliegen und ein Teilnehmer einen Ruf an einer anderen Teilnehmerendeinrichtung in der beschriebenen Weise entgegennehmen möchte, wird der bereits am längsten anliegende Ruf zu diesem Teilnehmer vermittelt.

Für das Funktionieren des bekannten Call-Pick-Up-Leistungsmerkmals ist vorausgesetzt, daß jede der Call-Pick-Up-Gruppe zugeordnete Teilnehmerendeinrichtung sowie die Teilnehmer sich innerhalb einer räumlichen Umgebung befinden, die es ermöglicht, daß ein an eine zu der Call-Pick-Up-Gruppe zugeordneten Teilnehmerendeinrichtung gerichteter Ruf von den Teilnehmern akustisch bzw. optisch wahrgenommen werden kann. Befinden sich Teilnehmer einer Call-Pick-Up-Gruppe nicht in einer solchen Umgebung, d. h. in akustischer bzw. optischer Reichweite, beispielsweise sind deren Arbeitsplätze in räumlich getrennten Büros untergebracht, so können die Teilnehmer einen ankommenden Ruf, der an eine sich in einem anderen Büro bzw. Raum befindenden Teilnehmerendeinrichtung gerichtet ist, nicht akustisch bzw. optisch wahrnehmen und können somit den Ruf nicht in der beschriebenen Weise übernehmen.

Dieser Nachteil kommt insbesondere dann zum Tragen, wenn eine Call-Pick-Up-Gruppe netzweit für Teilnehmer eingerichtet ist, deren Teilnehmerendeinrichtungen an unterschiedlichen Vermittlungsstellen angeschlossen sind. So befinden sich die Teilnehmer einer Call-Pick-Up-Gruppe, deren Teilnehmerendeinrichtungen an verschiedene Vermittlungsstellen angeschlossen sind, in der Regel in einer räumlich getrennten Umgebung. Eine solche ungünstige Situation tritt auch dann auf, wenn mobile Endgeräte von Teilnehmern eines Mobilfunknetzes zu einer derartigen Call-Pick-Up-Gruppe zugeordnet sind. Die mobilen Endgeräte befinden sich meistens außerhalb akutischer Reichweite zu den übrigen Call-Pick-Up-Gruppenmitgliedern. Die Behandlung von Centrex-Leistungsmerkmalen bzgl. Teilnehmern eines Mobilfunknetzes und eines Festnetzes ist schon in der deutschen Patentanmeldung 198 52 774.8 vorgeschlagen worden.

Das amerikanische Patent US 5.206.901 offenbart den einleitenden Teil des Anspruchs 1.

Die Aufgabe der Erfindung besteht darin, ein Verfahren zur Signalisierung eines ankommenden Rufes in der im Oberbegriff des Patentanspruchs 1 angegebenen Art zu verbessern.

Diese Aufgabe wird durch die im Kennzeichen des Anspruchs 1 angegebenen Merkmale gelöst. Vorteilhafte Ausgestaltungen der Erfindung sind in Unteransprüchen gekennzeichnet.

Der wesentliche Aspekt des erfindungsgemäßen Verfahrens ist darin zu sehen, daß der ankommende Ruf an die gerufene Teilnehmerendeinrichtung und zusätzlich an wenigstens eine außerhalb der Signalisierungsreichweite der gerufenen Teilnehmerendeinrichtung lokalisierte Teilnehmerendeinrichtung signalisiert wird.

Unter der Signalisierungsreichweite einer Teilnehmerendeinrichtung wird die Reichweite eines Rufsignals verstanden, innerhalb der Teilnehmer einen ankommenden Ruf z. B. akustisch bzw. optisch wahrnehmen können. Die Teilnehmerendeinrichtung, an die der ankommende Ruf zusätzlich signalisiert wird, kann auch an eine andere Vermittlungsstelle angeschlossen sein als die gerufene Teilnehmerendeinrichtung. Des weiteren kann eine Teilnehmerendeinrichtung mehreren solcher Teilnehmergruppen zugeordnet sein.

Der Vorteil des erfindungsgemäßen Verfahrens liegt insbesondere darin, daß das insbesondere das Leistungsmerkmal Call Pick Up auf Teilnehmer ausgeweitet werden kann, deren Teilnehmerendeinrichtungen sich jeweils außerhalb der Signalisierungsreichweite z. B. durch getrennte Räume befinden oder deren Teilnehmerendeinrichtungen jeweils an unterschiedlichen Vermittlungsstellen des Telekommunikationsnetzes angeschlossen sind. So funktioniert das Call-Pick-Up-Leistungsmerkmal auch über Netzgrenzen hinweg. Z. B. kann eine Teilnehmerendeinrichtung der Teilnehmergruppe über einen Festnetzanschluß an eine Vermittlungsstelle angeschlossen sein und eine weitere Teilnehmerendeinrichtung ein mobiles Endgerät sein, das gewöhnlicherweise über eine Luftschnittstelle mit einer Basisstation in Verbindung steht, die an eine mobile Vermittlungsstelle eines mit dem genannten Festnetz in Verbindung stehenden mobilen Netzes (z. B. GSM oder UMTS) angeschlossen ist.

Auch kann durch die erfindungsgemäße Vorgehensweise das genannte Call-Pick-Up-Leistungsmerkmal auf Teilnehmer ausgeweitet werden, die einen Telefondienst über ein mit dem Festnetz in Verbindung stehenden paketvermittelnden Datennetz (z.B. über Voice over IP) in Anspruch nehmen. Demnach könnte ein ankommender Ruf, der an eine zu einer Teilnehmergruppe zugeordneten Teilnehmerendeinrichtung gerichtet ist, zusätzlich an zu der Teilnehmergruppe gehörende Teilnehmerendeinrichtungen, die über ein solches Datennetz erreichbar sind, signalisiert werden. Umgekehrt können ankommende Rufe, die an derartige über ein solches Datennetz erreichbare Teilnehmerendeinrichtungen gerichtet sind, zusätzlich an der Teilnehmergruppe zugeordnete Teilnehmerendeinrichtungen eines Festnetzes signalisiert werden.

Zudem kann die zusätzliche Signalisierung an die außerhalb der Signalisierungsreichweite der gerufenen Teilnehmerendeinrichtung lokalisierten Teilnehmerendeinrichtung parallel oder zeitverzögert zur Signalisierung des ankommenden Rufes an die gerufene Teilnehmerendeinrichtung durchgeführt werden.

Außerdem kann die wenigstens eine außerhalb der Signalisierungsreichweite der gerufenen Teilnehmerendeinrichtung lokalisierte Teilnehmerendeinrichtung zum Empfang der zusätzlichen Signalisierung innerhalb der Teilnehmergruppe vorab bestimmt werden, wodurch die Laufzeit des Signalisierungsvorgangs verkürzt werden kann.

Die Erfindung sieht vor, daß die der Teilnehmergruppe zugeordneten Teilnehmerendeinrichtung, die außerhalb der Signalisierungsreichweite der gerufenen Teilnehmerendeinrichtung lokalisiert sind, Untergruppen zugeordnet werden können. Innerhalb einer solchen Untergruppe ist eine Teilnehmerendeinrichtung für den Empfang der zusätzlichen Signalisierung bestimmt. Auf diese Weise können innerhalb der Teilnehmergruppe bestimmte Zielgruppen z.B. Personen in einem Sekretariat bzw. in einem Entwicklungslabor für den Empfang der zusätzlichen Signalisierung definiert werden.

Zweckmäßigerweise werden die Untergruppen derart gebildet, daß die zu einer solchen Untergruppe zugeordneten Teilnehmerendeinrichtungen sich innerhalb der Signalisierungsreichweite der wenigstens einen Teilnehmerendeinrichtung befinden, an die der ankommende Ruf zusätzlich signalisiert wird.

Gemäß einer vorteilhaften Ausgestaltung der Erfindung werden eine oder mehrere Teilnehmergruppen durch den Inhalt einer Tabelle definiert, die in einer Vermittlungsstelle eines Telekommunikationsnetzes hinterlegt ist. Durch Veränderung des Tabelleninhalts wird die erfindungsgemäße Vorgehensweise, eine Teilnehmerendeinrichtung der Teilnehmergruppe, zum Empfang der zusätzlichen Signalisierung innerhalb der Teilnehmergruppe vorab zu bestimmen, erleichtert.

Eine Weiterbildung der Erfindung sieht bestimmte Tabellenfelder innerhalb der Tabelle für die Definition einer einzelnen Teilnehmergruppe vor. Die Definition der Teilnehmergruppe oder, mit anderen Worten ausgedrückt, die Zuordnung einer Teilnehmerendeinrichtung zu einer Teilnehmergruppe erfolgt hierbei durch Eintrag ihrer Rufnummer in diese für die Teilnehmergruppe vorgesehenen Tabellenfelder. Auf diese Weise wird für eine Übersichtlichkeit gesorgt, die insbesondere im Zusammenhang mit der Pflege und Administration dieser Tabelle ihren Nutzen findet.

Eine weitere vorteilhafte Ausgestaltung der Erfindung sieht vor, daß die eine oder mehrere Teilnehmerendeinrichtungen, an die der ankommende Ruf zusätzlich signalisiert werden soll, durch den Inhalt einer weiteren Tabelle festgelegt wird. Diese weitere Tabelle ist mit der die Teilnehmergruppe definierenden Tabelle verknüpft und ist ebenfalls in der selben Vermittlungsstelle hinterlegt. Somit wird gewährleistet, daß die Zuordnung einer Teilnehmerendeinrichtung zu einer Teilnehmergruppe sowie die wenigstens eine Teilnehmerendeinrichtung, an die der ankommende Ruf zusätzlich signalisiert werden soll, unabhängig voneinander administrierbar sind. Die Datenkonsistenz der beiden Tabellen wird durch deren Verknüpfung gesichert.

Zweckmäßigerweise sind die die Teilnehmergruppe definierende Tabelle und die mit dieser verknüpften weitere Tabelle in einer zentralen Datenbasis der Vermittlungsstelle gespeichert. Dadurch kann ein konsistenter und schneller Datenzugriff auf die genannten Tabellen sichergestellt werden.

Sinnvollerweise sollte in der genannten weiteren Tabelle zumindest die Rufnummer der wenigstens einen Teilnehmerendeinrichtung eingetragen sein, an die der ankommende Ruf zusätzlich signalisiert werden soll. Es können weitere Rufnummern von der Teilnehmergruppe zugeordneten Teilnehmerendeinrichtungen in diese Tabelle eingetragen werden.

Gegebenenfalls können durch Gruppierung dieser in der genannten weiteren Tabelle eingetragenen Rufnummern Untergruppen der vorstehend angegebenen Art zu einer Teilnehmergruppe gebildet werden. Innerhalb einer solchen Untergruppe kann dann mindestens eine Rufnummer als besondere Rufnummer gekennzeichnet werden, an deren Teilnehmerendeinrichtung der ankommende Ruf zusätzlich signalisiert werden soll. Durch eine solche Gruppierung können Teilnehmerendeinrichtungen der Teilnehmergruppe, die sich in Signalisierungsreichweite befinden, z. B. in einem gemeinsamen Raum angeordnet sind, einer solchen Untergruppe zugeordnet werden. Auch können diejenigen Teilnehmerendeinrichtungen einer Teilnehmergruppe, die an dieselbe Vermittlungsstelle angeschlossen sind, zu einer solchen Untergruppe zusammengefaßt werden.

Eine weitere Ausführungsform der genannten Weiterbildung sieht vor, daß nach jedem ankommenden Ruf jeweils mindestens eine andere als die mindestens eine bereits gekennzeichnete Rufnummer innerhalb der genannten Untergruppe gemäß einer vorbestimmten oder durch ein Zufallsprinzip festgelegten Reihenfolge gekennzeichnet wird. Damit wird erreicht, daß der ankommende Ruf nicht immer an eine einzige oder dieselben Teilnehmerendeinrichtungen einer Untergruppe zusätzlich signalisiert wird, sondern auch andere Teilnehmerendeinrichtungen für die zusätzliche Signalisierung des ankommenden Rufes herangezogen werden.

Im Zusammenhang mit den innerhalb einer Teilnehmergruppe gebildeten Untergruppen wird zweckmäßigerweise zumindest eine Rufnummer in der die Teilnehmergruppe definierenden Tabelle gekennzeichnet. Diese Kennzeichnung dient dem Zwecke, daß bei einem an die zur gekennzeichneten Rufnummer gehörenden Teilnehmerendeinrichtung gerichteten ankommenden Ruf eine zusätzliche Signalisierung des Rufes an die wenigstens eine andere Teilnehmerendeinrichtung durchgeführt wird. Auch diese Vorgehensweise erleichtert die Administrierung der in diese Tabelle eingetragenen Datensätze.

Eine weitere Ausgestaltung der Erfindung sieht vor, daß auf einem Display der mindestens einen Teilnehmerendeinrichtung, an die ein ankommender Ruf zusätzlich signalisiert wird, die Rufnummer der gerufenen Teilnehmerendeinrichtung und/oder der rufenden Teilnehmerendeinrichtung angezeigt wird. Damit wird dem Teilnehmer der den ankommenden Ruf an einer Teilnehmerendeinrichtung übernimmt, mitgeteilt, an welche Teilnehmerendeinrichtung der Ruf ursprünglich gerichtet war und/oder von welcher Teilnehmerendeinrichtung der Ruf kommt. Er kann somit die Intention des rufenden Teilnehmers vermuten und sich gegebenenfalls darauf einstellen.

Gemäß einer weiteren Ausführungsform der Erfindung können die Einträge in den genannten Tabelle von einer Teilnehmerendeinrichtung aus administriert werden. Auf diese Weise kann jeder Teilnehmer einer Teilnehmergruppe individuelle Wünsche in die genannten Tabellen eintragen. Z. B. kann jeder Teilnehmer festlegen, zu welcher oder zu welchen Teilnehmergruppen er gehören möchte, er kann auch diejenigen Teilnehmerendeinrichtungen festlegen, an die eine zusätzliche Signalisierung eines an seine Teilnehmerendeinrichtung gerichteten Rufes erfolgen soll, dies ist insbesondere dann von Vorteil, wenn ein Teilnehmer über mehrere Teilnehmerendeinrichtungen verfügt, die gegebenenfalls an verschiedene Vermittlungsstellen angeschlossen sind. So kann der Teilnehmer z. B. im Falle, daß er zeitweise im Büro und zeitweise zuhause arbeitet, dann seine Teilnehmerendeinrichtungen, die er zuhause installiert hat, durch Eintrag deren Rufnummern in die genannten Tabellen mit in eine Teilnehmergruppe aufnehmen. Er kann auch zeitweise für den Fall, daß er unterwegs ist, sein gegebenenfalls vorhandenes mobiles Endgerät einer Teilnehmergruppe zuordnen.

Zum Zwecke des Schutzes vor unbefugten Zugriff kann eine Administration der Einträge erst nach einer erfolgreich durchgeführten Teilnehmerauthorisierung zugelassen werden.

Gemäß einer weiteren Ausgestaltung der Erfindung erlangt die Zuordnung einer Teilnehmerendeinrichtung zu einer Teilnehmergruppe und/oder zu einer gegebenenfalls vorhandenen Untergruppe nur innerhalb einer einstellbaren Zeitspanne oder innerhalb eines sich wiederholenden Zeitabschnittes an Gültigkeit. Hierbei kann dem Teilnehmer eine regelmäßige Administrierung der Einträge in den genannten Tabellen abgenommen werden. Z. B. ist vorgesehen, daß der Teilnehmer an einem bestimmen Wochentag zuhause arbeitet. In diesem Fall kann für diesen Wochentag festgelegt werden, daß die sich im häuslichen Bereich des Teilnehmers befindliche Teilnehmerendeinrichtung zu einer bestimmten Teilnehmergruppe seiner Arbeitsstätte zugeordnet wird.

Nachstehend wird ein Ausführungsbeispiel der Erfindung unter Bezugnahme auf eine Zeichnung näher erläutert. In der Zeichnung zeigen:
Figur 1 eine erste Konstellation an Teilnehmerendeinrichtungen und Vermittlungsstellen innerhalb eines Telekommunikationsnetzes, in der das erfindungsgemäße Verfahren ablaufen kann, und
Figur 2 eine zweite derartige für das erfindungsgemäße Verfahren geeignete Konstellation innerhalb eines Telekommunikationsnetzes.

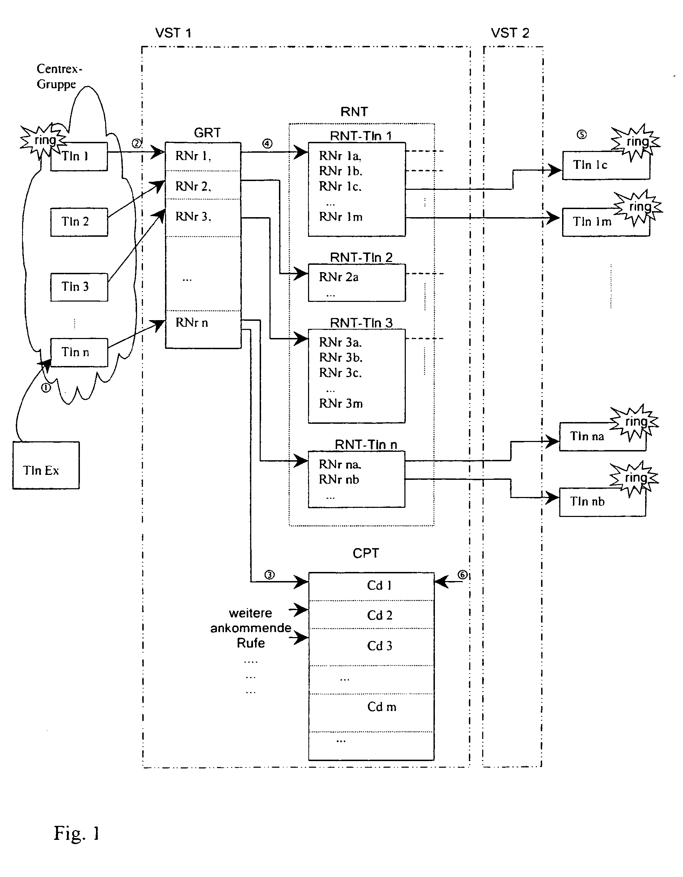

In der Figur 1 sind zwei mit gestrichelten Linien gekennzeichnete Vermittlungsstelle VST 1 und VST 2 angedeutet. Diese symbolisieren Vermittlungsstellen innerhalb eines Kommunikationsnetzes. Z. B. könnte die Vermittlungsstelle VST 1 eine Fernmeldevermittlungsstelle innerhalb eines Festnetzes und die Vermittlungsstelle VST 2 eine mobile Vermittlungsstelle innerhalb eines Mobilfunknetzes darstellen. Ebenso könnte die Vermittlungsstelle VST 2 einen Vermittlungsknoten bzw. einen Router innerhalb eines paketvermittelnden Netzes darstellen. Des weiteren sind Teilnehmerendeinrichtungen Tln 1, Tln 2, Tln 3 bis Tln gezeigt, von denen bzw. zu denen Rufe von und zur Vermittlungsstelle VST1 geführt werden. Die genannten Teilnehmerendeinrichtungen sind zu einer sogenannten Centrex-Gruppe zusammengefaßt, was durch eine Wolke um die Teilnehmerendeinrichtungen Tln 1 bis Tln n herum zum Ausdruck gebracht werden soll. Ankommende Rufe von und zu den in der Figur angedeuteten Teilnehmerendeinrichtungen Tln 1c, Tln na bis Tln nb werden von und zu der Vermittlungsstelle VST 1 über die Vermittlungsstelle VST 2 geleitet. Innerhalb der Vermittlungsstelle VST 1 werden verschiedene Tabellen GRT, RNT und CPT gezeigt, die üblicherweise in einer in der Vermittlungsstelle vorgesehenen und in der Figur nicht dargestellten zentralen Datenbasis gespeichert sind. Die Tabelle GRT symbolisiert eine Gruppentabelle einer Teilnehmergruppe z.B. einer Call-Pick-Up-Gruppe, in der die Rufnummern RNr 1 bis RNr n der jeweiligen Teilnehmerendeinrichtungen Tln 1 bis Tln n zusammengefaßt sind.

Die Tabelle RNT stellt eine Rufnummerntabelle dar, die wiederum in Untertabellen RNT-Tln1 bis RNT-Tln n untergliedert ist. In diesen Untertabellen sind jeweils diejenigen Rufnummern z. B. in der Tabelle RNT-Tln 1 die Rufnummern RNr la bis RNr 1m eingetragen, an deren entsprechende Teilnehmerendeinrichtungen z. B. Tln 1c bis Tln 1m ein an die Teilnehmerendeinrichtung Tln 1 gerichteter Ruf zusätzlich signalisiert werden soll. Beispielsweise könnte die in der Untertabelle RNT-Tln 1 eingetragene Rufnummer RNr 1a eine Rufnummer einer Teilnehmerendeinrichtung eines Teilnehmers sein, die sich an seinem Arbeitsplatz befindet, und die Rufnummer RNr 1m die Rufnummer eines zu einem Mobilfunknetz gehörenden mobiles Endgerät desselben Teilnehmers sein. Auch ist denkbar, daß z.B. die Rufnummer RNr. 3a eine Rufnummer bzw. eine Netzadresse (z.B. IP-Adresse) eines Teilnehmers darstellt, der über ein mit der Vermittlungsstelle VST 1 in Verbindung stehendes Datennetz, z.B. über das Internet, erreichbar ist und z.B. sogenannte Voice-over-IP-Dienste in Anspruch nimmt.

In der Tabelle CPT werden sämtliche an die zu der Pick-Up-Gruppe zugeordneten Teilnehmerendeinrichtung gerichteten Rufe zwischengespeichert, was in der Figur durch Cd 1 bis Cd m symbolisiert wird.

Des weiteren zeigt Figur 1 eine Teilnehmerendeinrichtung Tln Ex, die an eine beliebige in der Figur nicht dargestellte Vermittlungsstelle des Telekommunikationsnetzes angeschlossen sein kann.

In der Figur 1 sind die im folgenden zu erläuternden Schritte zum erfindungsgemäßen Verfahren mit Nummern 1-6 gekennzeichnet.

In Schritt 1 ruft ein externer nicht zur Centrex-Gruppe gehörender Teilnehmer mit seiner Teilnehmerendeinrichtung Tln Ex eine zu einer Call-Pick-Up-Gruppe zugeordneten Teilnehmerendeinrichtung z. B. Tln 1 eines Centrex-Teilnehmers an. Darauf ertönt an der Teilnehmerendeinrichtung Tln 1 ein Rufton, der in der Figur mit "Ring" gekennzeichnet wird. Im Schritt 2 wird anhand der Rufnummerneintragungen in der Tabelle GRT geprüft, ob die Teilnehmereinrichtung Tln 1 einer Call-Pickup-Gruppe zugeordnet ist. Für den Fall, daß die Teilnehmerendeinrichtung Tln 1 einer Call-Pick-Up-Gruppe zugeordnet ist, werden folgende Schritte ausgeführt:

In Schritt 3 wird die Rufnummer des rufenden Teilnehmers in eine transiente Tabelle CPT, in der sämtliche für die Call-Pickup-Gruppe anstehenden Rufe mit Rufnummern der rufenden Teilnehmerendeinrichtungen Cd 1 bis Cd m nach dem sogenannten FIFO-Prinzip (First in first out) zwischengespeichert werden, am Ende der Tabelle CPT eingetragen. In Schritt 4 werden diejenigen Rufnummern z. B. RNr 1a bis RNr 1m aus der für die Teilnehmerendeinrichtung TN1 vorgesehenen Untertabelle RNT-Tln 1 der Rufnummerntabelle RNT herausgesucht, an deren Teilnehmerendeinrichtungen z. B. Tln 1c bis Tln 1m der an die Teilnehmerendeinrichtung Tln 1 gerichtete Ruf zusätzlich signalisiert werden soll. In Schritt 5 wird schließlich der vom externen Teilnehmer Tln Ex initiierte Verbindungsaufbauwunsch sowohl an die Teilnehmerendeinrichtung Tln 1 als auch gleichzeitig bzw. parallel oder zeitverzögert an die Teilnehmerendeinrichtungen Tln 1c bis Tln 1m entsprechend ihrer in der Tabelle RNT-Tln 1 eingetragenen Rufnummern signalisiert. Dies wird in der Figur durch einen Rufton symbolisierendes "Ring" angedeutet. Auch wird an jeder Teilnehmerendeinrichtung, an die der ankommende Ruf zusätzlich signalisiert wird, die Rufnummer des gerufenen bzw. die Rufnummer des rufenden Teilnehmers auf einem Display angezeigt. Durch Annahme des signalisierten Rufes an einer Teilnehmerendeinrichtung z. B. Tln 1m durch einen Call-Pick-Up-Teilnehmer wird der ankommende Ruf an diese Teilnehmerendeinrichtung durchgeschaltet. Gleichzeitig werden die zusätzlich anliegenden Rufsignalisierungen an die weiteren Teilnehmerendeinrichtungen ausgelöst. In Schritt 6 wird die Rufnummer der Teilnehmerendeinrichtung Tln 1, an die der Ruf ursprünglich gerichtet war, aus der Tabelle CPT entfernt.

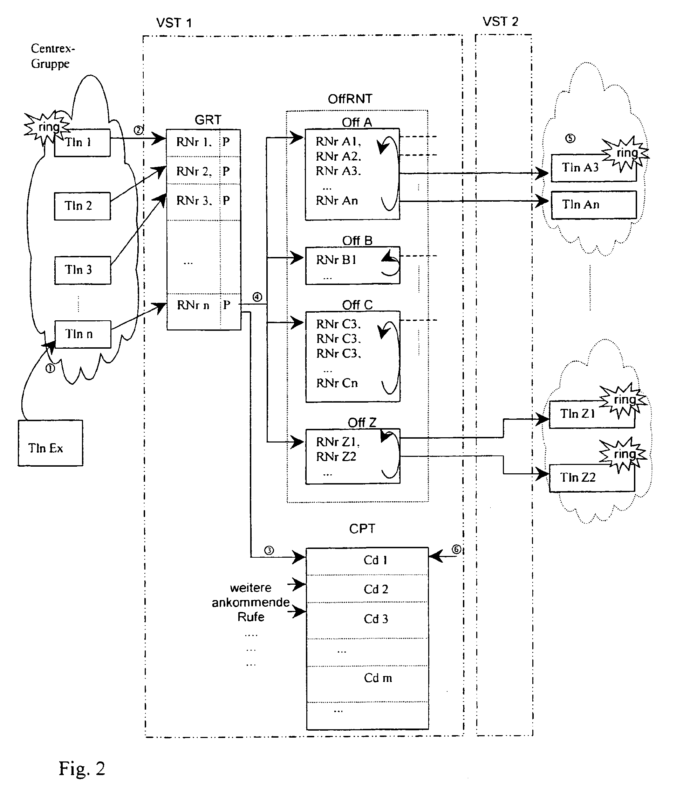

Die Figur 2 weicht in ihren dargestellten Elementen von der Figur 1 nur wie im folgenden erläutert ab:

In der Tabelle GRT sind hinter den jeweiligen Rufnummern RNr 1 bis RNr n mit "P" gekennzeichnete Markierungen angedeutet. Diese Markierungen der Rufnummern legen fest, welche Rufe, die an die der in GRT eingetragenen Rufnummer entsprechenden Teilnehmerendeinrichtung gerichtet sind, zusätzlich an weitere Teilnehmerendeinrichtungen signalisiert werden sollen. Des weiteren wird eine Tabelle OffRNT gezeigt, die der Rufnummerntabelle RNT der Figur 1 sehr ähnlich ist. Auch diese Tabelle ist wiederum in Untertabellen Off A bis Off Z untergliedert. In die Untertabellen Off A bis Off Z sind jeweils Rufnummern z. B. RNr A1 bis RNr An eingetragen, deren Teilnehmerendeinrichtungen z. B. Tln A1 bis Tln A2 sich in einer Umgebung befinden, innerhalb derer die an diese Teilnehmerendeinrichtungen signalisierten Rufe akustisch bzw. optisch wahrgenommen werden können. Eine solche Umgebung mit akustischer bzw. optischer Signalisierungsreichweite wird in der Figur durch mit gestrichelten Linien gekennzeichneten Wolken z.B. um die Teilnehmerendeinrichtungen Tln A3 bis Tln An bzw. Tln Z1 bis Tln Z2 angedeutet. Beispielsweise können sich die Teilnehmerendeinrichtungen mit den Rufnummern RNr A1 bis RNr An in einer räumlichen Büroumgebung befinden, während die Teilnehmerendeinrichtungen mit den Rufnummern RNr Z1 und RNr Z2 in einer anderen räumlich von der erst genannten Büroumgebung getrennten Büroumgebung installiert sein können.

Der in der Figur 2 gezeigte erfindungsgemäße Verfahrensablauf entspricht in Schritt 1, 2, 3 und 6 im wesentlichen den Verfahrensschritten, die bereits zu Figur 1 bereits erläutert wurden. Die Tabelle GRT der Figur 2 zeigt, daß z. B. die Rufnummer RNr 1 mit einem "P" gekennzeichnet ist. Dies bedeutet, daß ein an die Teilnehmerendeinrichtung Tln 1 gerichteter Ruf zusätzlich an weitere Teilnehmerendeinrichtungen der Call-Pick-Up-Gruppe signalisiert werden soll. Demnach wird in Schritt 4 aus allen in der Tabelle OffRNT vorhandenen Untertabellen Off A bis Off Z, die jeweils die Teilnehmerendeinrichtungen innerhalb einer Umgebung mit akustischer bzw. Signalisierungsreichweite repräsentieren, eine Rufnummer (z. B. die Rufnummern Rnr A1, Rnr B1, Rnr C3 und Rnr Z2) herausgesucht, an deren Teilnehmerendeinrichtungen (z. B. Tln A1, Tln B1, Tln C3 und Tln Z2) der an die Teilnehmerendeinrichtung Tln 1 gerichtete Ruf zusätzlich signalisiert werden soll. Das Heraussuchen dieser Rufnummern aus den genannten Untertabellen kann hierbei dadurch erfolgen, daß in den jeweiligen Untertabellen jeweils mindestens eine Rufnummer mit einer Markierung gekennzeichnet ist. Eine solche Markierung kann entweder auf eine einzige oder auf bestimmte mehrere Rufnummern dauerhaft festgelegt sein oder nach jedem erfolgreich durchgestellten ankommenden Ruf von einer Rufnummer zu einer anderen Rufnummer in der Untertabelle in einer bestimmten oder durch ein Zufallsprinzip festgelegten Reihenfolge wandern. In der Figur wird dieses "Wandern" der Markierung durch einen kreisförmig gebogenen Pfeil in den Untertabellen Off A bis Off Z angedeutet. Diese Vorgehensweise führt schließlich dazu, daß in Schritt 5 ein ankommender Ruf entweder immer an dieselbe Teilnehmerendeinrichtung z. B. Tln A3 innerhalb einer Umgebung mit akustischer bzw. optischer Signalisierungsreichweite z. B. einer Büroumgebung oder abwechselnd immer an eine andere Teilnehmerendeinrichtung zusätzlich signalisiert wird.

Auch sind die Tabellen GRT, RNT bzw. OffRNT sowie die Untertabellen RNT-Tln 1 bis RNT-Tln n bzw. Off A bis Off Z von einem Teilnehmerendeinrichtung aus administrierbar, nachdem sich ein Teilnehmer durch einen Zugangscode als Teilnehmergruppenmitglied (Call-Pick-Up-Gruppe) authorisiert hat. Auf diese Weise kann sich ein Teilnehmer eine von ihm genutzte Teilnehmerendeinrichtung temporär oder dauerhaft der entsprechenden Teilnehmergruppe zuordnen. Beispielsweise kann er sein Telefonapparat zu Hause oder sein zu einem Mobilfunknetz gehöhrendes mobiles Endgerät der Call-Pick-Up-Gruppe seiner Arbeitsumgebung im Büro zeitweise zuordnen, so daß er ankommende Rufe, die an andere der Call-Pick-Up-Gruppe zugeordnete Teilnehmerendeinrichtungen akustisch bzw. optisch wahrnehmen und dann übernehmen kann und umgekehrt, daß seine Kollegen im Büro die an seine Teilnehmerendeinrichtungen gerichteten ankommenden Rufe wahrnehmen und übernehmen können.

Ebenfalls ist denkbar, daß eine oder mehrere Teilnehmerendeinrichtungen anstatt durch manuelle Administrierung automatisch in Abhängigkeit von einer bestimmten Uhrzeit, z.B. von 14.00 bis 18.00 Uhr, oder periodisch, z.B. nur am Montag, einer Call-Pick-Up-Gruppe zugeordnet werden, so daß ankommende Rufe auch an diese Teilnehmerendrichtungen zusätzlich signalisiert werden können.

## Patentansprüche

1. Verfahren zur Signalisierung eines ankommenden Rufes, der an eine zu einer Teilnehmergruppe (Tln 1 bis Tln n) zugeordneten Teilnehmerendeinrichtung (Tln 1) gerichtetet ist und den ein Teilnehmer anstelle an der gerufenen Teilnehmerendeinrichtung auch an einer beliebigen anderen der Teilnehmergruppe zugeordneten Teilnehmerendeinrichtung annehmen kann, wobei der ankommende Ruf an die gerufene Teilnehmerendeinrichtung (Tln 1) und zusätzlich an wenigstens eine außerhalb der Signalisierungsreichweite der gerufenen Teilnehmerendeinrichtung lokalisierte Teilnehmerendeinrichtung (Tln 1c bis Tln 1m; Tln A3 bis Tln An) signalisiert wird, **dadurch gekennzeichnet, daß** die der Teilnehmergruppe zugeordneten Teilnehmerendeinrichtungen (Tln A3 bis Tln Z2), die außerhalb der Signalisierungsreichweite der gerufenen Teilnehmerendeinrichtung lokalisiert sind, Untergruppen zugeordnet werden, innerhalb derer der ankommende Ruf an mindestens eine Teilnehmerendeinrichtung (Tln A3, Tln Z1) der jeweiligen Untergruppe zusätzlich signalisiert wird.

2. Verfahren nach Anspruch 4 **dadurch gekennzeichnet, daß** die zu einer solchen Untergruppe zugeordneten Teilnehmerendeinrichtungen innerhalb der Signalisierungsreichweite der wenigstens einen Teilnehmerendeinrichtung lokalisiert sind, an die der ankommende Ruf zusätzlich signalisiert wird.

3. Verfahren nach einem der vorhergehenden Ansprüche **dadurch gekennzeichnet, daß** eine oder mehrere Teilnehmergruppen durch den Inhalt einer Tabelle (GRT), die in einer Vermittlungsstelle (VST 1) eines Telekommunikationsnetzes hinterlegt ist, definiert werden.

4. Verfahren nach Anspruch 6 **dadurch gekennzeichnet, daß** die Zuordnung einer Teilnehmerendeinrichtung zu einer Teilnehmergruppe durch Eintrag ihrer Rufnummer (RNr 1 bis RNr n) in für die Teilnehmergruppe vorgesehene Tabellenfelder innerhalb der Tabelle erfolgt.

5. Verfahren nach Anspruch 6 oder 7, **dadurch gekennzeichnet, daß** die wenigstens eine Teilnehmerendeinrichtung, an die der ankommende Ruf zusätzlich signalisiert werden soll, durch den Inhalt einer weiteren in der Vermittlungsstelle hinterlegten Tabelle (RNT; offRNT) festgelegt wird, die mit der die Teilnehmergruppe definierenden Tabelle (GRT) verknüpft ist.

6. Verfahren nach Anspruch 6 oder 8 **dadurch gekennzeichnet, daß** die die Teilnehmergruppe definierende Tabelle (GRT) und die mit dieser verknüpften weitere Tabelle (RNT; OffRNT) in einer zentralen Datenbasis der Vermittlungsstelle (VST 1) gespeichert sind.

7. Verfahren nach Anspruch 8 oder 9 **dadurch gekennzeichnet, daß** in der genannten weiteren Tabelle (RNT; OffRNT) zumindest die Rufnummer (RNr 1c: RNr A3) der wenigstens einen Teilnehmerendeinrichtung (Tln 1c: Tln A3) eingetragen ist, an die der ankommende Ruf zusätzlich signalisiert werden soll.

8. Verfahren nach Anspruch 10 **dadurch gekennzeichnet, daß** durch Gruppierung von in der genannten weiteren Tabelle (RNT; OffRNT) eingetragenen Rufnummern (RNr A1 bis RNr An, ..., RNr Z1 bis RNr Z2) von Teilnehmerendeinrichtungen die genannten Untergruppen (RNT-Tln1 bis RNT-Tln n; Off A bis Off Z) gebildet werden, innerhalb derer jeweils mindestens eine Rufnummer als besondere Rufnummer (RNr A1) **gekennzeichnet** werden kann, an deren Teilnehmerendeinrichtung der ankommende Ruf zusätzlich signalisiert werden soll.

9. Verfahren nach Anspruch 11 **dadurch gekennzeichnet, daß** nach jedem ankommenden Ruf jeweils mindestens eine andere als die mindestens eine bereits **gekennzeichnet**e Rufnummer innerhalb einer genannten Untergruppe (RNT-Tln1 bis RNT-Tln n; Off A bis Off Z) gemäß einer vorbestimmten oder durch ein Zufallsprinzip festgelegten Reihenfolge **gekennzeichnet** wird.

10. Verfahren nach Anspruch 11 **dadurch gekennzeichnet, daß** in der die Teilnehmergruppe definierenden Tabelle (GRT) zumindest eine Rufnummer zur zusätzlichen Signalisierung des an ihre Teilnehmerendeinrichtung (Tln 1) gerichteten ankommenden Rufes an die wenigstens eine außerhalb der Signalisierungsreichweite lokalisierten Teilnehmerendeinrichtung **gekennzeichnet** wird.

11. Verfahren nach einem der vorhergehenden Ansprüche **dadurch gekennzeichnet, daß** auf einem Display der mindestens einen Teilnehmerendeinrichtung, an die ein ankommender Ruf zusätzlich signalisiert wird, die Rufnummer der gerufenen Teilnehmerendeinrichtung (Tln 1) und/oder der rufenden Teilnehmerendeinrichtung (Tln Ex) angezeigt wird.

12. Verfahren nach einem der vohergehenden Ansprüche **dadurch gekennzeichnet, daß** die Einträge in den genannten Tabellen von einer Teilnehmerendeinrichtung aus administriert werden können.

13. Verfahren nach Anspruch 15 **dadurch gekennzeichnet, daß** die Administration der Einträge erst nach einer erfolgreich durchgeführten Teilnehmerauthorisierung zugelassen wird.

14. Verfahren nach einem der vorhergehenden Ansprüche **dadurch gekennzeichnet, daß** die Zuordnung einer Teilnehmerendeinrichtung zu einer Teilnehmergruppe und/oder zu einer gegebenenfalls vorhandenen Untergruppe nur innerhalb einer einstellbaren Zeitspanne oder innerhalb eines sich wiederholenden Zeitabschnittes gültig ist.

## Claims

1. Method for signaling an incoming call, which is directed to a subscriber terminal (Sub 1) which is associated with a subscriber group (Sub 1 to Sub n) and which a subscriber can also accept on any other subscriber terminal associated with that subscriber group instead of on the subscriber terminal being called, the incoming call being signaled not only to the called subscriber terminal (Sub 1) but also to at least one subscriber terminal (Sub 1c to Sub 1m; Sub A3 to Sub An) which is located beyond the signaling range of the called subscriber terminal, **characterized in that** those subscriber terminals (Sub A3 to Sub Z2) which are associated with the subscriber group but are located beyond the signaling range of the called subscriber terminal are associated with subgroups within which the incoming call is additionally signaled to at least one subscriber terminal (Sub A3, Sub Z1) in the respective subgroup.

2. Method according to Claim 1, **characterized in that** the subscriber terminals which are associated with such a subgroup are located within the signaling range of the at least one subscriber terminal to which the incoming call is additionally signaled.

3. Method according to one of the preceding claims, **characterized in that** one or more subscriber groups are defined by the contents of a table (GRT) which is stored in a switching center (VST 1) in a telecommunications network.

4. Method according to Claim 3, **characterized in that** a subscriber terminal is associated with a subscriber group by entering its call number (CNo 1 to CNo n) in table fields which are provided for that subscriber group within the table.

5. Method according to Claim 3 or 4, **characterized in that** the at least one subscriber terminal to which the incoming call is additionally intended to be signaled is defined by the contents of a further table (RNT; OffRNT), which is stored in the switching center and is linked to the table (GRT) which defines that subscriber group.

6. Method according to Claim 3 or 5, **characterized in that** the table (GRT) which defines the subscriber group, and the further table (RNT; OffRNT) which is linked to it, are stored in a central database in the switching center (VST 1).

7. Method according to Claim 5 or 6, **characterized in that** at least the call number (CNo 1c; CNo A3) of the at least one subscriber terminal (Sub 1c; Sub A3) to which the incoming call is additionally intended to be signaled is entered in said further table (RNT; OffRNT).

8. Method according to Claim 7, **characterized in that** said subgroups (RNT-Sub1 to RNT-Sub n; Off A to Off Z) are formed by grouping call numbers (CNo A1 to CNo An, ..., CNo Z1 to CNo Z2), which are entered in said further table (RNT; offRNT), of subscriber terminals, within which subgroups (RNT-Sub1 to RNT-Sub n; Off A to Off Z) at least one call number can in each case be identified as a special call number (CNo A1) to whose subscriber terminal the incoming call is additionally intended to be signaled.

9. Method according to Claim 8, **characterized in that**, after each incoming call, at least one call number other than the at least one already identified call number is in each case identified within such a subgroup (RNT-Sub1 to RNT-Sub n; Off A to Off Z) in accordance with a predetermined sequence or a sequence which is defined by a random principle.

10. Method according to Claim 8, **characterized in that**, in the table (GRT) which defines the subscriber group, at least one call number is identified for additional signaling of the incoming call which is directed to its subscriber terminal (Sub 1) to the at least one subscriber terminal which is located beyond the signaling range.

11. Method according to one of the preceding claims, **characterized in that** the call number of the called subscriber terminal (Sub 1) and/or of the calling subscriber terminal (Sub Ex) is indicated on a display for the at least one subscriber terminal to which an incoming call is additionally signaled.

12. The method according to one of the preceding claims, **characterized in that** the entries in said tables can be administered from one subscriber terminal.

13. The method according to Claim 15, **characterized in that** the administration of the entries is allowed only after a subscriber authorization process has been successfully carried out.

14. The method according to one of the preceding claims, **characterized in that** the association of a subscriber terminal with a subscriber group and/or with any subgroup which may exist is applicable only within a time interval which can be set or within a recurrent time period.

## Revendications

1. Procédé pour la signalisation d'un appel arrivant, qui est envoyé à un terminal d'abonné (Tln 1) attribué à un groupe d'abonnés (Tln 1 à Tln n) et qu'un abonné peut accepter également sur un autre terminal d'abonné quelconque attribué au groupe d'abonnés que le terminal d'abonné appelé, l'appel arrivant étant signalé au terminal d'abonné (Tln 1) appelé et en supplément a au moins un terminal d'abonné (Tln 1c à Tln 1m ; Tln A3 à Tln An) localisé hors de portée de signalisation du terminal d'abonné appelé, **caractérisé en ce que** les terminaux d'abonné (Tln A3 à Tln Z2) attribués au groupe d'abonnés, qui sont localisés hors de portée de signalisation du terminal d'abonné appelé, sont attribués à des sous-groupes, à l'intérieur desquels l'appel arrivant est signalé en supplément à au moins un terminal d'abonné (Tln A3 à Tln Z1) du sous-groupe respectif.

2. Procédé selon la revendication 1, **caractérisé en ce que** les terminaux d'abonné attribués à un tel sous-groupe sont localisés à l'intérieur de la portée de signalisation du au moins un terminal d'abonné, auquel l'appel arrivant est signalé en supplément.

3. Procédé selon l'une quelconque des revendications précédentes, **caractérisé en ce qu'**un ou plusieurs groupes d'abonnés sont définis par le contenu d'un tableau (GRT), qui est déposé dans un centre de commutation (VST 1) d'un réseau de télécommunication.

4. Procédé selon la revendication 3, **caractérisé en ce que** l'attribution d'un terminal d'abonné à un groupe d'abonnés s'effectue par inscription de son numéro d'appel (RNr 1 à RNr n) dans des champs de tableau prévus pour le groupe d'abonnés à l'intérieur du tableau.

5. Procédé selon la revendication 3 ou 4, **caractérisé en ce que** le au moins un terminal d'abonné, auquel l'appel arrivant doit être signalé en supplément, est défini par le contenu d'un autre tableau (RNT ; OffRNT) déposé dans le tableau de commutation, qui est associé au tableau (GRT) définissant le groupe d'abonnés.

6. Procédé selon la revendication 3 ou 5, **caractérisé en ce que** le tableau (GRT) définissant le groupe d'abonnés et l'autre tableau (RNT ; OffRNT) associé à celui-ci sont stockés dans une base de données centrale du centre de commutation (VST 1).

7. Procédé selon la revendication 5 ou 6, **caractérisé en ce que** au moins le numéro d'appel (RNr 1c, RNr A3) du au moins un terminal d'abonné (Tln 1c ; Tln A3), auquel l'appel arrivant doit être signalé en supplément, est inscrit dans ledit autre tableau (RNT ; OffRNT).

8. Procédé selon la revendication 7, **caractérisé en ce que**, par le groupement de numéros d'appel (RNr A1 à RNr An, ..., RNr Z1 à RNr Z2), inscrits dans ledit autre tableau (RNT ; OffRNT), de terminaux d'abonné, lesdits sous-groupes (RNT-Tln 1 à RNT-Tln n ; Off A jusqu'à Off Z) sont formés, sous-groupes à l'intérieur desquels à chaque fois au moins un numéro d'appel peut être **caractérisé en** tant que numéro d'appel particulier (RNr A1), au terminal d'abonné, duquel l'appel arrivant doit être signalé en supplément.

9. Procédé selon la revendication 8, **caractérisé en ce que**, après chaque appel arrivant, à chaque fois au moins un autre numéro d'appel que le au moins un numéro d'appel déjà **caractérisé** est repéré à l'intérieur d'un sous-groupe (RNT-Tln 1 à RNT-Tln n ; Off A à Off Z) cité selon un ordre de succession prédéfini ou fixé par un principe aléatoire.

10. Procédé selon la revendication 8, **caractérisé en ce que**, dans le tableau (GRT) définissant le groupe d'abonnés, au moins un numéro d'appel est **caractérisé** pour la signalisation supplémentaire de l'appel arrivant employé à son terminal d'abonné (Tln 1) à au moins un terminal d'abonné localisé hors de portée de signalisation.

11. Procédé selon l'une quelconque des revendications précédentes, **caractérisé en ce que**, sur un écran du au moins un terminal d'abonné, auquel un appel arrivant est signalé en supplément, le numéro d'appel du terminal d'abonné (Tln 1) appelé et/ou du terminal d'abonné (Tln Ex) appelé est affiché.

12. Procédé selon l'une quelconque des revendications précédentes, **caractérisé en ce que** les inscriptions dans lesdits tableaux peuvent être administrées à partir d'un terminal d'abonné.

13. Procédé selon la revendication 12, **caractérisé en ce que** l'administration des inscriptions n'est autorisée qu'après une autorisation d'abonné effectuée avec succès.

14. Procédé selon l'une quelconque des revendications précédentes, **caractérisé en ce que** l'attribution d'un terminal d'abonné à un groupe d'abonnés et/ou à un sous-groupe éventuellement existant n'est valable qu'à l'intérieur d'un laps de temps réglable ou à l'intérieur d'une période de temps récurrente.
